# EUROPEAN PATENT SPECIFICATION

(11) **EP 2 761 461 B1**
(45) Date of publication and mention of the grant of the patent: **04.01.2017**
(21) Application number: 12835308.3
(22) Date of filing: 30.09.2012
(51) Int. Cl.: H04L 12/24, H04L 12/58, H04L 29/14, H04L 29/08

(54) **COMMUNICATING UNEXPECTED COLLABORATION SERVER RESPONSES ON RECONNECTION**
KOMMUNIKATION VON UNERWARTETEN KOLLABORATIONSSERVERANTWORTEN AUF EINE WIEDERVERBINDUNG
COMMUNICATION DE RÉPONSES D'UN SERVEUR DE COLLABORATION INATTENDUES LORS DE LA RECONNEXION

(30) Priority: 30.09.2011 US 201113249243
(43) Date of publication of application: 06.08.2014
(73) Proprietor: Microsoft Technology Licensing, LLC, Redmond, WA 98052 (US)
(72) Inventor: MANNING, Sara, Redmond Washington 98052-6399 (US); ESTEVE BALDUCCI, Juan V., Redmond Washington 98052-6399 (US); PINTOS, Fabio, Redmond Washington 98052-6399 (US); CLAUX, David, Redmond Washington 98052-6399 (US)
(74) Representative: Grünecker Patent- und Rechtsanwälte PartG mbB
(86) International application number: PCT/US2012/058205
(87) International publication number: WO 2013/049781

(56) References cited:
- US-A1- 2003 196 136
- US-A1- 2004 117 453
- US-A1- 2004 205 263
- US-A1- 2006 238 652
- US-A1- 2010 083 032
- US-B1- 6 665 820
- US-B1- 7 111 205
- US-B1- 7 111 205

## Description

### BACKGROUND

Asynchronous communication services such as email, text messaging, and comparable ones are a big part of daily lives facilitating exchange of information for personal, business, and other purposes. Asynchronous communication services typically include one or more servers managing the communications over one or more networks, where users access the services through thick or thin clients. Thick clients are locally installed client applications that perform a majority of the functionality locally synchronizing with a server periodically or on-demand. Thin clients are typically generic applications such as web browsers that enable access to communication services through a user interface controlled by a server, where a majority of the functionality is server-based.

When network connectivity exists, thick or thin clients provide a seamless user experience. On the other hand, if network connectivity is lost, a client application may still provide some of the functionality to a user, but not be able to synchronize with the server. Thus, some of the communication services may be interrupted. For example, email messages may not be sent or retrieved, calendar items may not be updated, etc. In some implementations, a client application may act normal and perform the functions even when network connectivity is absent and replay user actions once connectivity is restored. The network interruption may not always be for a short period, however. If the interruption last a relatively long period (e.g., hours or days), replaying the user action upon restoration of connectivity, or an error in the replay of a user action upon restoration of connectivity, may lead to user confusion. For example, a scheduled appointment may be provided to the user after its scheduled time is past. Some conventional systems alert the user every time there is an interruption, which may degrade user experience. Other systems simply do not report any of the failures, which could result in worse situations such as the user losing confidence in the communication system.

US 2006/0238652 A1 relates to a system and method for managing synchronization of devices and to a system and method for providing a single aggregation point used to manage synchronization of multiple devices. A method for displaying and managing information related to at least one sync operation is included. A sync operation begins, for example, when a user connects the device to the terminal via the coupling. The sync manager contains a sync application program interface (API) that contains objects and methods used in a sync operation. The sync API includes one or more sync handlers, each of which specifies how a sync operation is to be performed. The sync UI caches one or more of the sync handlers to expedite the display. The sync UI includes first-, second-, and third-layer UI components. The tray icon becomes green to indicate that all sync operations were completed successfully; becomes yellow to indicate that a user input is requested, or becomes red to indicate that an error has occurred during one or more sync operations.

US 7,111,205 B1 relates to a method, apparatus and computer system for automatically reporting of faults in a telephonic network. A method of generating an alarm report for a distributed communication system is disclosed. When a network fault is detected, a determination is made by a fault analyzer whether or not the detected fault is a reportable fault. If the detected fault is a reportable fault, then an alarm report based upon the reportable fault is generated which is then distributed based upon a distribution list.

US 2004/0205263 A1 relates to a method, device and system for synchronizing of data providing for the handling of an interrupted synchronization process. A method for resuming an interruption of a previous incomplete synchronization session related to an exchange of data between two devices is provided. The method features the step of sending from the first device to the second device an alert for resuming signal containing information related to a request for the resumption of the previous incomplete synchronization session. The alert for resuming signal may at least be a direct alert code or the like directly indicating a resume session or a signal that is deductable by the server, e.g., an indication of the time stamps to be used in the session or some other identification of the session. The method also features the step of sending from the second device to the first device a status for the alert signal indicative of information related to a sync type to be carried out. The information related to the status of the alert for resume signal may include information for overriding an earlier sync type of the previous incomplete synchronization session.

### SUMMARY

It is the object of the present invention to reduce computational efforts and to reduce the number of user interactions for providing failure response due to connectivity loss in a communication system.

This object is solved by the subject matter of the independent claims.

Preferred embodiments are defined by the dependent claims.

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

Embodiments are directed to a set of workflows for supporting proper user notifications after an action is taken by the user in conjunction with an asynchronous communication service. Timing and/or type of the notifications or an action to be taken by the service may be determined based on one or more of a nature of the user action that failed, a time elapsed since the action was taken, multi-action dependencies, device types, and similar characteristics enhancing user experience and reducing confusion.

These and other features and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

FIG. 1 illustrates an example system for facilitating asynchronous communication services, where embodiments may be implemented;
FIG. 2 illustrates an example web-based email service architecture according to embodiments;
FIG. 3 illustrates example action flows in a communication service according to embodiments;
FIG. 4 illustrates the architecture of an example system with offline support according to embodiments;
FIG. 5 illustrates an example user interface for an email service with support for offline action notifications according to embodiments;
FIG. 6 is a networked environment, where a system according to embodiments may be implemented;
FIG. 7 is a block diagram of an example computing operating environment, where embodiments may be implemented; and
FIG. 8 illustrates a logic flow diagram for a process of communicating unexpected collaboration server responses upon reconnection according to embodiments.

### DETAILED DESCRIPTION

As briefly described above, proper user notifications may be provided after an action is taken by the user in conjunction with an asynchronous communication service, and in particular when that action fails to replay correctly to the server. Notifications and tasks to be performed in response to user actions when network connectivity is interrupted may be determined based on predefined criteria and at least a portion of created/modified data cached locally. Timing and/or type of the notifications or an action to be taken by the service may be determined based on one or more of a nature of the user action that failed, a time elapsed since the action was taken, multi-action dependencies, device types, and similar characteristics enhancing user experience and reducing confusion.

In the following detailed description, references are made to the accompanying drawings that form a part hereof, and in which are shown by way of illustrations specific embodiments or examples. These aspects may be combined, other aspects may be utilized, and structural changes may be made without departing from the scope of the present disclosure. The following detailed description is therefore not to be taken in a limiting sense, and the scope of the present invention is defined by the appended claims and their equivalents.

While the embodiments will be described in the general context of program modules that execute in conjunction with an application program that runs on an operating system on a computing device, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable computing devices. Embodiments may also be practiced in distributed computing environments where tasks are performed by remote processing devices that are linked through a communications network. In a distributed computing environment, program modules may be located in both local and remote memory storage devices.

Embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium can for example be implemented via one or more of a volatile computer memory, a non-volatile memory, a hard drive, a flash drive, a floppy disk, or a compact disk, and comparable media.

Throughout this specification, the term "platform" may be a combination of software and hardware components for providing asynchronous communication services such as email or text messaging. Examples of platforms include, but are not limited to, a hosted service executed over a plurality of servers, an application executed on a single computing device, and comparable systems. The term "server" generally refers to a computing device executing one or more software programs typically in a networked environment. However, a server may also be implemented as a virtual server (software programs) executed on one or more computing devices viewed as a server on the network. More detail on these technologies and example operations is provided below. As used herein, the term "action" refers to user interaction with a communication application such as selecting/activating a user interface element or providing input through the user interface. The term "task" refers to operations performed by the system in response to "actions" or other events in providing communication services to the users.

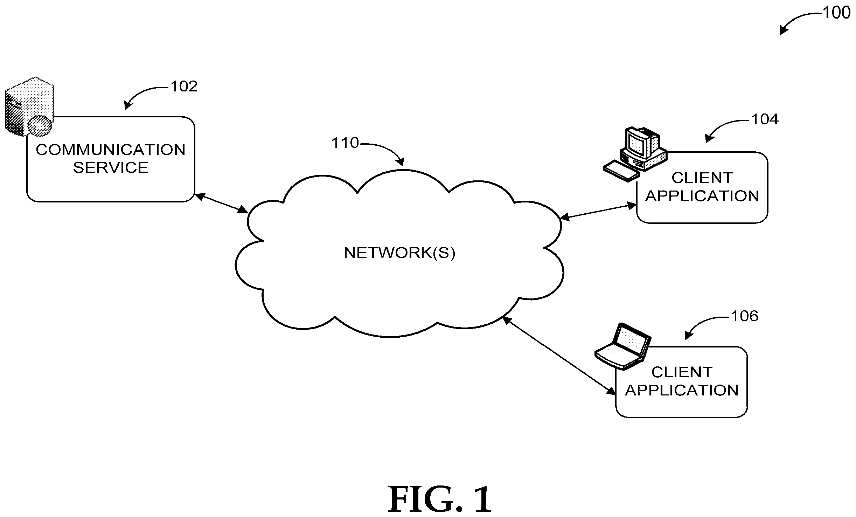

FIG. 1 illustrates, in diagram 100, an example system for facilitating asynchronous communication services, where embodiments may be implemented. A communication service 102 may facilitate services asynchronous communications such as email exchange, text message exchange, and similar ones, along with ancillary features such as scheduling services (calendar), contacts, task lists, and comparable ones. Communication service 102 may interact with client applications 104, 106 over network(s) 110 to facilitate exchange of communications.

Client applications 104, 106 may be thick of thin clients. Thick clients are locally installed client applications that perform a majority of the functionality locally synchronizing with a server periodically or on-demand. Thin clients are typically generic applications such as web browsers that enable access to communication services through a user interface controlled by a server, where a majority of the functionality is server-based. In either case, functionality of the client applications is dependent on connectivity to the communication service 102.

A client application may be disconnected from network(s) 110 when providing email, calendar or contacts features of an email exchange service, for example, particularly on a portable device. The actions that a user takes may be replayed once connectivity is restored without user intervention. The disconnect period may, however, be seconds, minutes, hours or days. If an action fails to replay wholly or partially, the challenge is whether and how to indicate the replay failure to the user.

In a system according to embodiments, failure notifications may be provided and tasks associated with the failed actions performed based on a number of predefined criteria such as a type or nature of the failure, a time of failure, a type of application or device, etc. The actions may include, but are not limited to, sending / deleting / modifying a message, creating / deleting / modifying a calendar or contact item, or creating / deleting / modifying properties for an item. Thus, in response to detecting a failure to replay an action, a system according to embodiments may apply one or more criteria and perform the tasks including providing a notification (type, timing, format of notification). Some of the created / modified data may also be cached locally based on the criteria.

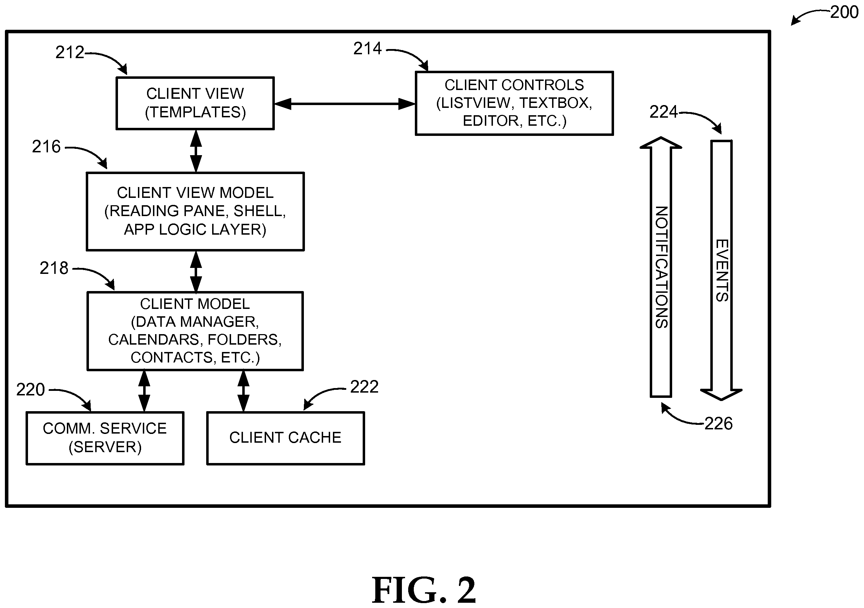

FIG. 2 illustrates an example web-based email service architecture according to embodiments in diagram 200.

According to some embodiments, if a user chooses the ability to work offline in their client application, the application may create a local data store (client cache 222) to store items associated with the application, for example, email, calendar and contacts in an email application to support functionality while the application is disconnected. When the application is connected, the user interface may read and write user actions from and to the local data store (for both performance and to keep it up-to-date), and write actions to both the local data store and to the server (communication service 220) to maintain synchronization. For any actions that may be too resource-intensive to be written locally, a data synchronization component may copy incremental server changes to the local data store directly.

Other major functional components in a system according to embodiments may include client controls 214 managing elements such as listview, textbox, editor, etc.; client view 212, which is a collection of templates that are a composition of primitive controls; client view model 216, which includes the application logic; and client model 218, which includes data manager, calendars, folders, contacts, etc.

As mentioned above, client view model 216 may include user interface specific application logic and maintain application state. According to some embodiments, client view model 216 may have no knowledge of the user interface and the states may be exposed through properties and command bindings. Responsibility of responding to a user action with changes in client model 218 may belong in this layer.

Client view 212 may bind to user experience interface and act like a reflection of client view model 216 in the user interface. Data binding is the main mechanism for communication between client view 212 and lower layers. Client view 212, which is a collection of templates comprising primitive controls may have a 1:1 mapping to client view model 216. The configuration employing data binding between client view 212 and client view model 216 may enable creation of the entire view for the view model using templates. In a system as the one shown in diagram 200, notifications 226 may flow from communication service 220 toward client controls 214, while event flow from client controls 214 toward communication service 220 or client cache 222.

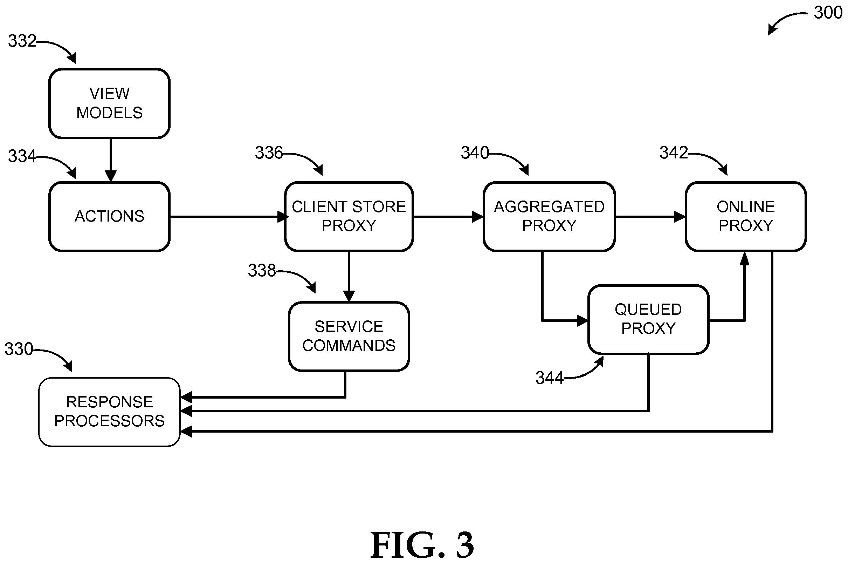

FIG. 3 illustrates example action flows in a communication service according to embodiments in diagram 300. In a system according to embodiments, actions 334 may be obtained through view models 332 as discussed above.

When a communication application is connected, the user interface may read and write user actions from and to the local data store (client store proxy 336) and write actions to both the local data store and to the server to maintain synchronization. When the application loses connectivity, actions 334 may be committed locally until connectivity is restored. To have these actions reflected on the server once connectivity is restored, the actions 334 may be stored in a queue (queued proxy 344) in a local web database table or native device database table at the same time that they are committed locally. In some embodiments, an aggregated proxy 340 may be employed between client store proxy 336 and the server's online proxy 342. The flow may be directly from aggregated proxy 340 to online proxy 342 or via queued proxy 344. Whenever the device regains connectivity (as determined by a separate process, such as a connectivity manager), the actions may be played back to the server (to online proxy 342).

If the server is not able to process the action, it may return a failure response. The failure response may be passed to the response processor 330 in the action manager architecture. The response processor 330 may provide information to enable the user interface code to choose if and how to surface the failure to the user based on a number of factors. Data about each of these factors may be returned with the failure response to the response processor. The factors may include, but are not limited to, a type of failure, whether other actions depend on this action's success, time since action was taken, a device on which the action was taken, a user profile and/or usage, a communication method (e.g., email vs. text message exchange), or a nature of the action. For example, creation / modification / deletion of a calendar item that involves a user's own time may be less critical than when the calendar item involves other users (e.g., a meeting) as well. Short term disconnects may be transparent to a user (e.g., for calendar or contact item related actions), while long term disconnects may have significance in terms of planning, communication, analysis, etc.

In some example implementations, the type of failure may include creation of high investment custom content, such as a new message or meeting request, creation of low investment custom content, such as adding or changing the phone number on a contact, changing item-wide properties, such as deleting a message or moving to a different folder, and changing single properties within an item, such as setting a flag or marking the item as read.

The dependency of other actions on a particular action's success may be, for example, a message having a recipient whose address does not exist in the organization. Send may succeed, but address name resolution for that single recipient may fail. In case of single failures on which other actions are dependent a rollback of all related actions may be performed or other actions may be allowed to proceed and the failure of only this action returned. Thus, response processor 330 can invoke code to react accordingly to a success or failure response, and dependent on success or failure responses of related or dependent action, from the server whenever connectivity is restored, at which time the action may be replayed, re-queued, or purged (ignored).

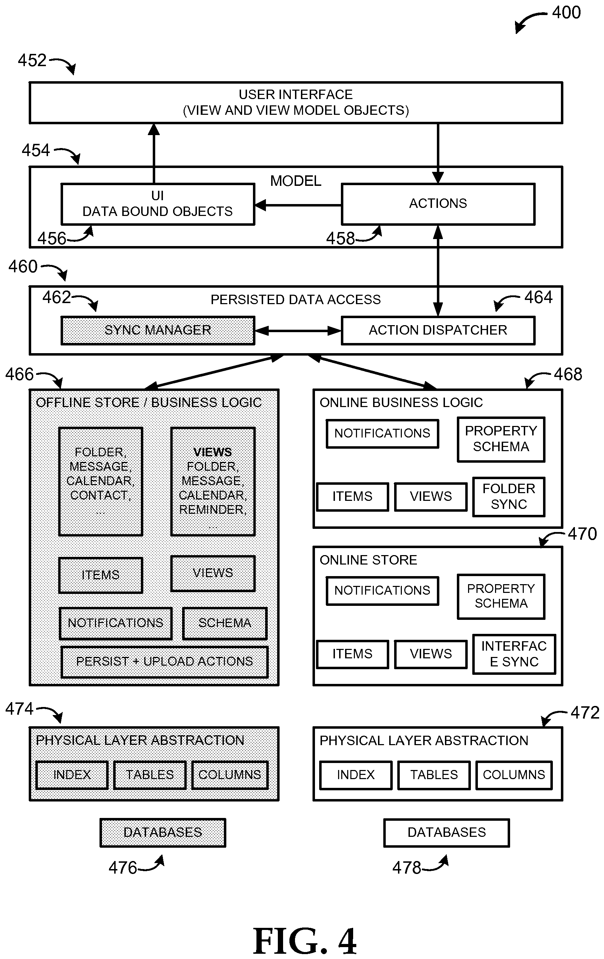

FIG. 4 illustrates the architecture of an example system with offline support according to embodiments in diagram 400.

User interface 452 is the top layer of the system enabling interaction with users and including view and view model objects. Actions 458 such as reply to a message, change an item property, delete a property, read a message, etc. received from the user interface layer 452 may be used for user interface data bound objects 456 that feed back to the user interface layer 452. Actions 458 and data bound objects 456 are in model layer 454 (client-side).

On the server side, a persisted data access layer 460 may include action dispatcher 464 and sync manager 462. Action dispatcher 464 may receive the actions (e.g., using an action request call). Actions may be provided to and tasks in response to the actions (for the user interface) received from online and offline business logic and data stores. Sync manager 462 may facilitate synchronization of actions and failure responses between online and offline states.

Online business logic 468 may include folders, messages, attachments, calendars, contacts, and similar items associated with the communication service. Online business logic 468 may also include the views for those items, as well as folder synchronization logic, notifications logic, and property schema logic. Online store 470 may store folders, messages, and attachments as well as views for those. Online store 470 may further include interface synchronization, the notifications, and property schema. A physical layer abstraction for 472 for the online business logic may include indices, tables, and columns, and enable interaction with databases such as relational databases or others.

Offline business logic and store combination 466 may include items feeding into folders, messages, attachments, calendars, contacts, and similar ones, as well as views for the same. Offline business logic and store combination 466 may further include notifications, views, and persist-and-upload actions. Physical layer abstraction for 474 for the offline business logic may also include indices, tables, and columns, and enable interaction with databases such as web relational databases, indexed databases, or others.

The example systems in FIG. 1 through 4 have been described with specific configurations, applications, and interactions. Embodiments are not limited to systems according to these examples. A system for providing an adaptive monitoring system for monitoring the performance of a cloud service may be implemented in configurations employing fewer or additional components and performing other tasks. Furthermore, specific protocols and/or interfaces may be implemented in a similar manner using the principles described herein.

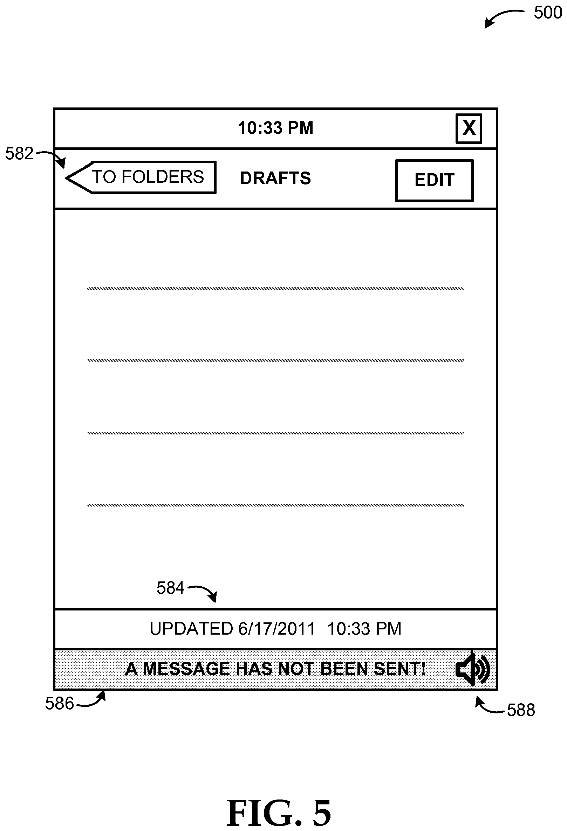

FIG. 5 illustrates an example user interface for an email service with support for offline action notifications according to embodiments. User notifications about failures may be provided in a variety of ways through any communication application user interface. the example user interface 500 in FIG. 5 is for illustration purposes only.

In a system according to embodiments, user experience may be enhanced through a number of features according to some embodiments. For example, the code to render the user experience may decide if and how to surface the errors to the user based on evaluation of the factors discussed above and returned to a response processor by the action manager architecture. The user experience may choose one of the approaches below based on the data provided by the response processor, in order from most to least invasive and attention-grabbing (which may correspond to most to least critical failures, respectively).

Notifications may be surfaced through sounds or vibration similar to the user experience when receiving a text message or calendar notification (in devices which support surfacing this type of notification). Information may be displayed on the main screen of the device or on a main view of a web-based application user interface (e.g., a web-based email application). The information may also be detailed in a message added to the user's inbox.

Example user interface 500 presents a "Drafts" folder of an email application. A user interface element 582 enables a user to return to a listing of all folders. A brief status update 584 indicates to the user the last time the local version was updated. As discussed above, a visual notification 586 may emphasize to the user a nature of the failure. The visual notification 586 may be accompanied by an audio notification 588 such as a specific sound. In other embodiments, more detailed information about the failure such as a communication associated with the failure, a time of the failure, user options to mitigate the failure, etc. may also be displayed depending on user interface configuration, available screen space, device type, etc.

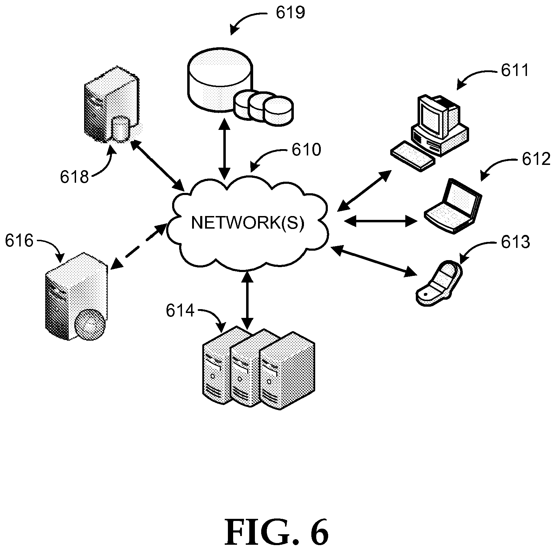

FIG. 6 is an example networked environment, where embodiments may be implemented. A system for communicating unexpected collaboration server responses upon reconnect may be implemented via software executed over one or more servers 614 such as a hosted service. The platform may communicate with client applications on individual computing devices such as a smart phone 613, a laptop computer 612, or desktop computer 611 ('client devices') through network(s) 610.

Client applications executed on any of the client devices 611-613 may facilitate communications via application(s) executed by servers 616, or on individual server 616. A communication application executed on one of the servers may facilitate providing failure notifications to users and performance of appropriate tasks based on predefined criteria as discussed above. The application may retrieve relevant data from data store(s) 619 directly or through database server 618, and provide requested services to the user(s) through client devices 611-613.

Network(s) 610 may comprise any topology of servers, clients, Internet service providers, and communication media. A system according to embodiments may have a static or dynamic topology. Network(s) 610 may include secure networks such as an enterprise network, an unsecure network such as a wireless open network, or the Internet. Network(s) 610 may also coordinate communication over other networks such as Public Switched Telephone Network (PSTN) or cellular networks. Furthermore, network(s) 610 may include short range wireless networks such as Bluetooth or similar ones. Network(s) 610 provide communication between the nodes described herein. By way of example, and not limitation, network(s) 610 may include wireless media such as acoustic, RF, infrared and other wireless media.

Many other configurations of computing devices, applications, data sources, and data distribution systems may be employed to implement a platform for providing communication services with failure notifications due to network connectivity interruption. Furthermore, the networked environments discussed in FIG. 5 are for illustration purposes only. Embodiments are not limited to the example applications, modules, or processes.

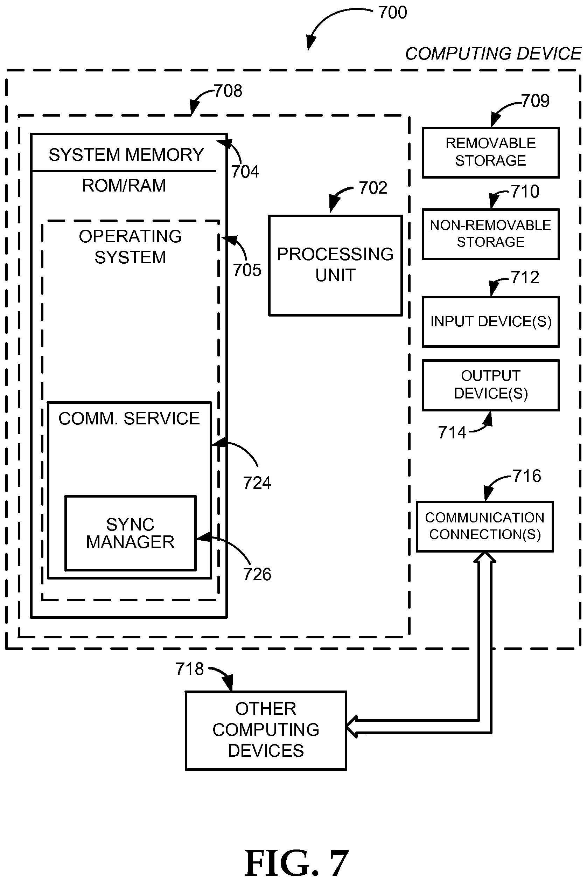

FIG. 7 and the associated discussion are intended to provide a brief, general description of a suitable computing environment in which embodiments may be implemented. With reference to FIG. 7, a block diagram of an example computing operating environment for an application according to embodiments is illustrated, such as computing device 700. In a basic configuration, computing device 700 may be any computing device such as a server executing a communication application providing connectivity related failure notification according to embodiments and include at least one processing unit 702 and system memory 704. Computing device 700 may also include a plurality of processing units that cooperate in executing programs. Depending on the exact configuration and type of computing device, the system memory 704 may be volatile (such as RAM), non-volatile (such as ROM, flash memory, etc.) or some combination of the two. System memory 704 typically includes an operating system 705 suitable for controlling the operation of the platform, such as the WINDOWS ® operating systems from MICROSOFT CORPORATION of Redmond, Washington. The system memory 704 may also include one or more software applications such as communication service 724 and a sync manager module 726.

When communication application 724 loses connectivity, actions may be committed locally until connectivity is restored. Whenever the client device regains connectivity, the actions may be played back to a server. If the server is not able to process the action, it may return a failure response. Sync manager module 726 may determine how to surface the failure to the user based on a number of factors. The factors may include, but are not limited to, a type of failure, whether other actions depend on this action's success, time since action was taken, or device on which the action was taken. This basic configuration is illustrated in FIG. 7 by those components within dashed line 708.

Computing device 700 may have additional features or functionality. For example, the computing device 700 may also include additional data storage devices (removable and/or non-removable) such as, for example, magnetic disks, optical disks, or tape. Such additional storage is illustrated in FIG. 7 by removable storage 709 and non-removable storage 710. Computer readable storage media may include volatile and nonvolatile, removable and non-removable media implemented in any method or technology for storage of information, such as computer readable instructions, data structures, program modules, or other data. System memory 704, removable storage 709 and non-removable storage 710 are all examples of computer readable storage media. Computer readable storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and which can be accessed by computing device 700. Any such computer readable storage media may be part of computing device 700. Computing device 700 may also have input device(s) 712 such as keyboard, mouse, pen, voice input device, touch input device, and comparable input devices. Output device(s) 714 such as a display, speakers, printer, and other types of output devices may also be included. These devices are well known in the art and need not be discussed at length here.

Computing device 700 may also contain communication connections 716 that allow the device to communicate with other devices 718, such as over a wired or wireless network in a distributed computing environment, a satellite link, a cellular link, a short range network, and comparable mechanisms. Other devices 718 may include computer device(s) that execute communication applications, web servers, and comparable devices. Communication connection(s) 716 is one example of communication media. Communication media can include therein computer readable instructions, data structures, program modules, or other data. By way of example, and not limitation, communication media includes wired media such as a wired network or direct-wired connection, and wireless media such as acoustic, RF, infrared and other wireless media.

Example embodiments also include methods. These methods can be implemented in any number of ways, including the structures described in this document. One such way is by machine operations, of devices of the type described in this document.

Another optional way is for one or more of the individual operations of the methods to be performed in conjunction with one or more human operators performing some. These human operators need not be collocated with each other, but each can be only with a machine that performs a portion of the program.

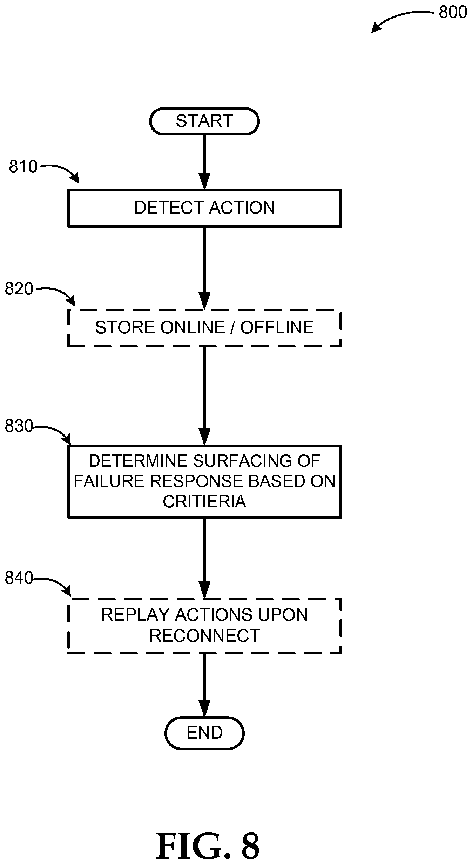

FIG. 8 illustrates a logic flow diagram for a process of communicating unexpected collaboration server responses upon reconnection according to embodiments. Process 800 may be implemented in a communication system providing failure responses to users when network connectivity is lost.

Process 800 begins with operation 810, where a user action such as creation / deletion / modification of an item (message, appointment, contact, property) may be detected through the interaction of a user with the user interface. The user interface may be complemented by view and view model components interacting through data binding in detecting actions and providing responses to the user.

At optional operation 820, the actions may be provided to a server and stored at a local cache as backup in case of network connectivity loss. When the application loses connectivity, actions may be committed locally until connectivity is restored. To have these actions reflected on the server once connectivity is restored, the actions may be stored in a queue in a local web database table or native device database table at the same time that they are committed locally

At operation 830, a response processor may determine when and how to surface a failure response to the user (through the user interface) based on one or more factors. If the server is not able to process the action, it may return a failure response. The failure response may be passed to the response processor in the action manager architecture. The response processor may provide information to enable the user interface code to choose if and how to surface the failure to the user based on a number of factors. Data about each of these factors may be returned with the failure response to the response processor. The factors may include, but are not limited to, a type of failure, whether other actions depend on this action's success, time since action was taken, or device on which the action was taken.

At optional operation 840, the actions may be replayed upon restoration of network connectivity. When the application is connected, the user interface may read and write user actions from and to the local data store (for both performance and to keep it up-to-date), and write actions to both the local data store and to the server to maintain synchronization.

The operations included in process 800 are for illustration purposes. A process for communicating unexpected collaborative server responses upon reconnect may be implemented by similar processes with fewer or additional steps, as well as in different order of operations using the principles described herein.

The above specification, examples and data provide a complete description of the manufacture and use of the composition of the embodiments. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments.

## Claims

1. A method at least partially executed on a computing device for providing a failure notification due to connectivity loss in a communication system, the method comprising:
receiving (810) a user action from a user interface of a communication application;
determining a failure to provide the received action to a server due to connectivity loss; storing (820) the received action at a local cache; and
determining (830) a timing and a type of surfacing of the failure notification through the user interface based on at least one from a set of: a type of the failure, whether other actions depend on the received action's success, a time since the action was received, a device on which the action was received, a user profile, a usage, a type of the action, and a type of facilitated communication;
the method further comprising:
providing a status update to a user through the user interface that indicates a last time when a local version of the received action was updated.

2. The method of claim 1, further comprising:
replaying the stored action to the server upon reestablishing connectivity.

3. The method of claim 1, further comprising:
surfacing the failure notification through at least one from a set of: a sound alert, a vibration alert, a visual notification on a main view of the user interface, an informative email message and an event to be handled by the system.

4. The method of claim 1, further comprising:
displaying detailed information about the failure through one of the user interface and via a message, the information including at least one from a set of: a communication associated with the failure, a time of the failure, one or more user options to mitigate the failure.

5. The method of claim 1, wherein the user interface is enabled to read and write user actions from and to a local data store, and write actions to the server to maintain synchronization when connectivity is reestablished.

6. A communication system for providing a failure notification due to connectivity loss, the system comprising:
a client controls module (214) managing a user interface configured to receive a user action (334, 458) and to surface the failure notification (586, 588);
a connection manager module configured to determine a failure to provide the received action to a server (614, 616, 618) due to connectivity loss;
a client view module (212) that is a collection of templates for the user interface;
a client view model (216) that includes application logic for the user interface, wherein
the application logic is configured to determine a timing and a type of surfacing of then
failure notification based on a plurality of factors including a type of the failure, whether other actions depend on the received action's success, a time since the action was received, a device on which the action was received, a user profile, a usage, a type of the action, and a type of facilitated communication; and
a local cache (222) for storing the received user action,
wherein the user interface is adapted to provide a status update that indicates to a user a last time
when a local version of the received action was updated.

7. The system of claim 6, wherein the client view model maintains application states.

8. The system of claim 6, wherein the application logic is further configured to:
store received actions in a queue in one of a local web database table and a native device database table when the actions are committed locally.

9. A computer-readable memory device with instructions stored thereon for providing a failure notification due to connectivity loss in a communication system, the instructions comprising:
receiving (810) a user action from a user interface of a communication application;
determining a failure to provide the received action to a server due to connectivity loss;
storing (820) the received action in a local cache;
determining (830) a timing and a type of surfacing of the failure notification through the user interface based on a plurality of factors including a type of the failure, whether other actions depend on the received action's success, a time since the action was received, a device on which the action was received, a user profile, a usage, a type of the action, and a type of facilitated communication; and
replaying (840) the stored action to the server upon reestablishing connectivity,
the computer-readable memory device comprising further instructions to
providing a status update to a user through the user interface that indicates a last time when a local version of the received
action was updated.

## Patentansprüche

1. Verfahren, das zumindest zum Teil auf einem Computergerät ausgeführt wird, zum Bereitstellen einer Fehlermeldung aufgrund von Verbindungsverlust in einem Kommunikationssystem, wobei das Verfahren umfasst:
Empfangen (810) einer Benutzeraktion von einer Benutzerschnittstelle einer Kommunikationsanwendung;
Bestimmen eines Fehlers beim Bereitstellen der empfangenen Aktion für einen Server aufgrund von Verbindungsverlust;
Speichern (820) der empfangenen Aktion in einem lokalen Zwischenspeicher; und
Bestimmen (830) eines Zeitpunkts und eines Typs des Auftretens der Fehlermeldung durch die Benutzerschnittstelle, basierend auf mindestens einem aus einem Satz aus:
einem Fehlertyp, ob andere Aktionen vom Erfolg der empfangenen Aktion abhängen, einer Zeit seit dem Empfang der Aktion, einem Gerät, auf dem die Aktion empfangen wurde, einem Benutzerprofil, einer Nutzung, einem Typ der Aktion, und einem Typ der ermöglichten Kommunikation;
wobei das Verfahren des Weiteren umfasst:
Bereitstellen einer Statusaktualisierung für einen Benutzer durch die Benutzerschnittstelle, die einem Benutzer einen Zeitpunkt anzeigt, an dem eine lokale Version der empfangenen Aktion zuletzt aktualisiert wurde.

2. Verfahren nach Anspruch 1, des Weiteren umfassend:
Wiedergeben der gespeicherten Aktion für den Server bei Wiederherstellung der Verbindung.

3. Verfahren nach Anspruch 1, des Weiteren umfassend:
Anzeigen der Fehlermeldung durch mindestens eines aus einem Satz aus: einem akustischen Alarmsignal, einem Vibrationsalarm, einer visuellen Benachrichtigung auf einer Hauptanzeige der Benutzerschnittstelle, einer informativen E-Mail-Nachricht und einem Ereignis, das von dem System verwaltet werden kann.

4. Verfahren nach Anspruch 1, des Weiteren umfassend:
Anzeigen von ausführlichen Informationen über den Fehler durch eines aus der Benutzerschnittstelle und mittels einer Nachricht, wobei die Informationen mindestens eines aus einem Satz aus Folgendem beinhalten: eine dem Fehler zugeordnete Kommunikation, ein Zeitpunkt des Fehlers, eine oder mehrere Benutzeroptionen zum Abmildern des Fehlers.

5. Verfahren nach Anspruch 1, wobei die Benutzerschnittstelle dazu in der Lage ist, Benutzeraktionen aus einem lokalen Datenspeicher zu lesen und dort hineinzuschreiben, und Aktionen für den Server zu schreiben, um die Synchronisation beizubehalten, wenn die Verbindung wieder hergestellt ist.

6. Kommunikationssystem zum Bereitstellen einer Fehlermeldung aufgrund von Verbindungsverlust, wobei das System umfasst:
ein Client-Steuermodul (214) zum Verwalten einer Benutzerschnittstelle, die dazu konfiguriert ist, eine Benutzeraktion (334, 458) zu empfangen und die Fehlermeldung anzuzeigen (586, 588);
ein Verbindungs-Verwaltungsmodul, das dazu konfiguriert ist, einen Fehler beim Bereitstellen der empfangenen Aktion für einen Server (614, 616, 618) aufgrund von Verbindungsverlust zu bestimmen;
ein Client-Anzeigemodul (212), das eine Sammlung aus Vorlagen für die Benutzerschnittstelle ist;
ein Client-Anzeigemodell (216), das Anwendungslogik für die Benutzerschnittstelle beinhaltet, wobei
die Anwendungslogik dazu konfiguriert ist, einen Zeitpunkt und einen Typ des Auftretens der Fehlermeldung durch die Benutzerschnittstelle basierend auf einer Vielzahl von Faktoren zu bestimmen, darunter ein Fehlertyp, ob andere Aktionen vom Erfolg der empfangenen Aktion abhängen, eine Zeit seit dem Empfang der Aktion, ein Gerät, auf dem die Aktion empfangen wurde, ein Benutzerprofil, eine Nutzung, ein Typ der Aktion, und ein Typ der ermöglichten Kommunikation; und
einen lokalen Zwischenspeicher (222) zum Speichern der empfangenen Benutzeraktion,
wobei die Benutzerschnittstelle dazu eingerichtet ist, eine Statusaktualisierung bereitzustellen, die einem Benutzer einen Zeitpunkt anzeigt, an dem eine lokale Version der empfangenen Aktion zuletzt aktualisiert wurde.

7. System nach Anspruch 6, wobei das Client-Anzeigemodell Anwendungsstatus pflegt.

8. System nach Anspruch 6, wobei die Anwendungslogik des Weiteren zu Folgendem konfiguriert ist:
Speichern der empfangenen Aktionen in einer Schlange in einem aus einer lokalen Internet-Datenbanktabelle und einer nativen Geräte-Datenbanktabelle, wenn die Aktionen lokal durchgeführt werden.

9. Computerlesbare Speichervorrichtung mit darauf gespeicherten Befehlen zum Bereitstellen einer Fehlermeldung aufgrund von Verbindungsverlust in einem Kommunikationssystem, wobei die Befehle umfassen:
Empfangen (810) einer Benutzeraktion von einer Benutzerschnittstelle einer Kommunikationsanwendung;
Bestimmen eines Fehlers beim Breitstellen der empfangenen Aktion für einen Server aufgrund von Verbindungsverlust;
Speichern (820) der empfangenen Aktion in einem lokalen Zwischenspeicher;
Bestimmen (830) eines Zeitpunkts und eines Typs des Auftretens der Fehlermeldung durch die Benutzerschnittstelle basierend auf einer Vielzahl von Faktoren, darunter ein Fehlertyp, ob andere Aktionen vom Erfolg der empfangenen Aktion abhängen, eine Zeit seit dem Empfang der Aktion, ein Gerät, auf dem die Aktion empfangen wurde, ein Benutzerprofil, eine Nutzung, ein Typ der Aktion, und ein Typ der ermöglichten Kommunikation; und
Wiedergeben (840) der gespeicherten Aktion für den Server bei Wiederherstellung der Verbindung,
wobei die computerlesbare Speichervorrichtung weitere Befehle umfasst zum
Bereitstellen einer Statusaktualisierung für einen Benutzer durch die Benutzerschnittstelle, die einen Zeitpunkt anzeigt, an dem eine lokale Version der empfangenen Aktion zuletzt aktualisiert wurde.

## Revendications

1. Procédé exécuté au moins partiellement sur un dispositif informatique permettant de fournir une notification d'échec due à une perte de connectivité dans un système de communication, le procédé comprenant les étapes suivantes :
recevoir (810) une action utilisateur à partir d'une interface utilisateur d'une application de communication ;
déterminer un échec pour fournir l'action reçue auprès d'un serveur en raison d'une perte de connectivité ;
stocker (820) l'action reçue au niveau d'une mémoire cache locale ; et
déterminer (830) un temps et un type de surfaçage de la notification d'échec par l'intermédiaire de l'interface utilisateur sur la base d'au moins un élément parmi un ensemble suivant : un type de l'échec, si d'autres actions dépendent du succès de l'action reçue, un temps écoulé depuis que l'action a été reçue, un dispositif sur lequel l'action a été reçue, un profil utilisateur, un usage, un type de l'action, et un type de communication facilitée ;
le procédé comprenant en outre :
fournir une mise à jour d'état à un utilisateur par l'intermédiaire de l'interface utilisateur qui indique une dernière fois qu'une version locale de l'action reçue a été mise à jour.

2. Procédé selon la revendication 1, comprenant en outre :
répéter l'action stockée auprès du serveur lors du rétablissement de la connectivité.

3. Procédé selon la revendication 1, comprenant en outre :
surfacer la notification d'échec par l'intermédiaire d'au moins un élément parmi un ensemble suivant : une alerte sonore, une alerte de vibration, une notification visuelle sur une vue principale de l'interface utilisateur, un message électronique informatif et un événement devant être traité par le système.

4. Procédé selon la revendication 1, comprenant en outre :
afficher des informations détaillées concernant l'échec par l'intermédiaire d'un de l'interface utilisateur et par le biais d'un message, les informations comportant au moins un élément parmi un ensemble suivant : une communication associée à l'échec, une heure de l'échec, une ou plusieurs options utilisateur permettant de compenser l'échec.

5. Procédé selon la revendication 1, dans lequel l'interface utilisateur peut lire et écrire des actions utilisateur depuis et vers un magasin de données local, et écrire des actions auprès du serveur pour maintenir une synchronisation lorsqu'une connectivité est rétablie.

6. Système de communication permettant de fournir une notification d'échec due à une perte de connectivité, le système comprenant :
un client commande un module (214) gérant une interface utilisateur configurée pour recevoir une action utilisateur (334, 458) et pour surfacer la notification d'échec (586, 588) ;
un module de gestionnaire de connexion configuré pour déterminer un échec pour fournir l'action reçue auprès d'un serveur (614, 616, 618) dû à une perte de connectivité ;
un module de vue client (212) qui est une collection de modèles pour l'interface utilisateur ;
un modèle de vue client (216) qui comporte une logique d'application pour l'interface utilisateur, la logique d'application étant configurée pour déterminer un temps et un type de surfaçage de la notification d'échec sur la base d'une pluralité de facteurs comprenant un type de l'échec, si d'autres actions dépendent du succès de l'action reçue, un temps écoulé depuis que l'action a été reçue, un dispositif sur lequel l'action a été reçue, un profil utilisateur, un usage, un type de l'action, et un type de communication facilitée ; et
une mémoire cache locale (222) destinée à stocker l'action utilisateur reçue,
l'interface utilisateur étant conçue pour fournir une mise à jour d'état qui indique à un utilisateur une dernière fois qu'une version locale de l'action reçue a été mise à jour.

7. Système selon la revendication 6, dans lequel le modèle de vue client maintient des états d'application.

8. Système selon la revendication 6, dans lequel la logique d'application est en outre configurée pour :
stocker des actions reçues dans une file d'attente d'une table parmi une table de base de données Web locale et une table de base de données de dispositifs native lorsque les actions sont engagées localement.

9. Dispositif de mémoire lisible par ordinateur stockant des instructions permettant de fournir une notification d'échec due à une perte de connectivité dans un système de communication, les instructions comprenant :
recevoir (810) une action utilisateur à partir d'une interface utilisateur d'une application de communication ;
déterminer un échec pour fournir l'action reçue auprès d'un serveur en raison d'une perte de connectivité ;
stocker (820) l'action reçue dans une mémoire cache locale ; déterminer (830) un temps et un type de surfaçage de la notification d'échec par l'intermédiaire de l'interface utilisateur sur la base d'une pluralité de facteurs comportant un type de l'échec, si d'autres actions dépendent du succès de l'action reçue, un temps écoulé depuis que l'action a été reçue, un dispositif sur lequel l'action a été reçue, un profil utilisateur, un usage, un type de l'action, et un type de communication facilitée ; et
répéter (840) l'action stockée auprès du serveur lors du rétablissement de la connectivité,
le dispositif de mémoire lisible par ordinateur comprenant d'autres instructions destinées à fournir une mise à jour d'état à un utilisateur par l'intermédiaire de l'interface utilisateur qui indique une dernière fois qu'une version locale de l'action reçue a été mise à jour.
